# EUROPÄISCHE PATENTSCHRIFT

(11) **EP 0 999 097 B1**
(45) Veröffentlichungstag und Bekanntmachung des Hinweises auf die Patenterteilung: **24.03.2004**
(21) Anmeldenummer: 99113838.9
(22) Anmeldetag: 15.07.1999
(51) Int. Cl.: B60R 11/02, G11B 33/02, H04B 1/08

(54) **Frontrahmen für ein elektrisches Gerät und elektrisches Gerät**
Front panel for an electrical apparatus and electrical apparatus
Panneau frontal pour un appareil électrique et appareil électrique

(30) Priorität: 05.11.1998 DE 19850930
(43) Veröffentlichungstag der Anmeldung: 10.05.2000
(73) Patentinhaber: ROBERT BOSCH GMBH, 70442 Stuttgart (DE)
(72) Erfinder: Kirchhoff, Karsten, 31196 Sehlem (DE)

(56) Entgegenhaltungen:
- DE-A- 4 008 536
- DE-A- 19 535 678
- PATENT ABSTRACTS OF JAPAN vol. 017, no. 610 (M-1508), 10. November 1993 (1993-11-10) & JP 05 185877 A (PIONEER ELECTRON CORP), 27. Juli 1993 (1993-07-27)

## Beschreibung

### Stand der Technik

Es sind bereits elektrische Geräte bekannt, wie beispielsweise Autoradios, CD-Player, Kassettenrecorder, Funkgeräte usw., welche eine vor die Gerätefront schwenkbare Abdeckklappe aufweisen. Die Abdeckklappe dient beispielsweise dazu, eine an der Gerätefrontseite vorgesehene Einführungsöffnung für einen Aufzeichnungsträger abzudecken oder auf der Klappeninnenseite zusätzlichen Platz für Bedienelemente zur Bedienung des Gerätes bereitzustellen. Bekannt ist auch, die Abdeckklappe beispielsweise um 90° schwenkbar an der Frontseite des Gerätes anzuordnen und auf der Innenseite der Abdeckklappe eine Aufnahme für eine Chipkarte vorzusehen, welche bei geschlossener Abdeckklappe zwischen der Gerätefrontseite und der Klappeninnenseite angeordnet ist und von außen nicht mehr sichtbar ist. Bei den bekannten Geräten ist die Schwenkmechanik der Abdeckklappe teilweise im Gehäuseinnenraum des Gerätes angeordnet. So ist beispielsweise aus der deutschen Patentanmeldung mit dem Aktenzeichen DE 197 23 952.8, die den Oberbegriff des Anspruchs 1 entspricht, ein elektrisches Gerät mit einer vor die Gerätefront schwenkbaren Abdeckklappe beschrieben, bei dem Hebel, Arretierungselemente und Gelenke des halbautomatischen Schwenkmechanismus größtenteils im Inneren des Gerätegehäuses angeordnet sind.

Kundenwünsche und Anpassungen des Designs machen häufig eine konstruktive Abänderung der Abdeckklappe erforderlich. Dies hat aber zur Folge, daß auch die Schwenkmechanik geändert werden muß, was bei den im Stand der Technik bekannten Geräten eine recht aufwendige Abänderung des Aufbaus im Inneren des Gerätes erforderlich macht. Auch im umgekehrten Fall, wenn eine Änderung des inneren Geräteaufbaus angestrebt wird, müssen Teile der Schwenkmechnik oft an anderer Stelle im Gerätegehäuse angebracht werden und somit die Abdeckklappe entsprechend angepaßt werden. Nachteilig ist auch, daß der von der Schwenkmechanik beanspruchte Platz im Geräteinnenraum nicht mehr für die Unterbringung anderer elektronischer oder mechanischer Komponenten zur Verfügung steht.

### Vorteile der Erfindung

Der erfindungsgemäße Frontrahmen mit den Merkmalen des Anspruchs 1 der Anmeldung hat demgegenüber den Vorteil, daß der mit der Abdeckklappe versehene Frontrahmen an verschiedenen Gerätegehäusen angeordnet werden kann, wobei kein Teil der Schwenkmechanik in den Gehäuseinnenraum des Gerätes hineinragt. Die elektrischen und mechanischen Baukomponenten des Gerätes können somit vorteilhaft unabhängig von der speziellen Ausgestaltung der Schwenkmechanik im Inneren des Gerätes angeordnet werden, da die Schwenkmechanik vollständig an der von dem Geräteinnenraum abgewandten Seite des Frontrahmens angeordnet ist. Hierdurch wird die Flexibilität und das Raumangebot im Inneren des Gerätegehäuses vergrößert. Der Frontrahmen mit der Abeckklappe umfaßt vorteilhaft nur wenige Bauteile und ist preisgünstig herstellbar und auf einfache Weise an dem Gerätegehäuse festlegbar.

Durch die in den weiteren Ansprüchen aufgeführten Maßnahmen sind vorteilhafte Weiterbildungen und Verbesserungen möglich.

Besonders vorteilhaft ist, wenn an der zur Befestigung an dem elektrischen Gerät vorgesehenen ersten Seite des Frontrahmens Befestigungsmittel vorgesehen sind, die in komplementär ausgebildete Befestigungsmittel an der Gehäusefront des Gerätes eingreifen. Hierdurch wird erreicht, daß der Frontrahmen quasi die Aufgabe einer einheitlichen Schnittstelle zwischen dem Gerätegehäuse und der Abdeckklappe übernimmt. Ein und derselbe Frontrahmen kann somit beispielsweise durch eine standardisierte Befestigungsgeometrie an verschiedenen Geräten befestigt werden. Die Befestigungsmittel können beispielsweise als einfache Rastmittel ausgestaltet sein, welche auf der dem Gerätegehäuse zugewandten Seite des Frontrahmens abstehen und in komplementär ausgebildete, an der Gehäusefront angeordnete Rastmittel eingreifen. Der Frontrahmen kann dann einfach auf die Gehäusefront eines elektrischen Gerätes aufgeklipst werden. In einem anderen Ausführungsbeispiel ist vorgesehen, die Befestigungsmittel mit dem Frontrahmen zu verschrauben.

Vorteilhaft ist weiterhin, wenn der Frontrahmen an gegenüberliegenden Randbereichen der zweiten Seite zwei von der zweiten Seite abstehende Schenkel aufweist, an denen die Abdeckklappe schwenkbar angeordnet ist. Die Abdeckklappe ist vorteilhaft als im wesentlichen rechteckförmiges Plattenteil mit einer im geschlossenen Zustand der zweiten Seite zugewandten Innenseite und einer dieser gegenüberliegenden Außenseite ausgebildet und mit zwei Lagerbolzen versehen, die in jeweils eine in den Schenkeln vorgesehene Öffnung drehbeweglich eingreifen.

Vorteilhaft ist an der zweiten Seite des Frontrahmens wenigstens ein die Schwenkbewegung beim Öffnen der Abdeckklappe dämpfendes Dämpfungsglied angeordnet ist. Durch das Dämpfungsglied wird eine gleichmäßige Bewegung beim Öffnen der Abdeckklappe erreicht. Beim Schwenken der Abdeckklappe treibt ein an der Innenseite der Abdeckklappe angeordnetes Zahnradsegment ein damit in Eingriff stehendes Zahnrad an, welches über einen zu der Schwenkachse der Abdeckklappe parallelen Lagerbolzen drehbeweglich an dem Dämpfungsglied derart gelagert ist, daß einer Drehung des Lagerbolzens in dem Dämpfungsglied angeordnete Dämpfungsmittel bremsend entgegenwirken. Das Dämpfungsglied kann vorteilhaft einfach an einem der Schenkel festgelegt werden.

Die Abdeckklappe kann auf einfache Weise entgegen der Spannkraft eines in den Frontrahmen eingesetzten Federelementes zur zweiten Seite des Frontrahmens hingeschwenkt werden und ist im geschlossenen Zustand mittels eines vollständig an dem Frontrahmen angeordneten Verriegelungsmechanismus arretierbar. Auf einfache Weise wird hierdurch ein halbautomatischer Klappenschwenkmechanismus an dem Frontrahmen ausgebildet, wobei die Abdeckklappe manuell geschlossen werden kann und sich beim Öffnen durch die Spannkraft des Federelementes automatisch öffnet.

Vorteilhaft kann die Abdeckklappe mit Bedienelementen zur Bedienung des elektrischen Gerätes versehen sein, beispielsweise Funktionstasten, einer Display-Anzeige oder ähnlichen Elementen, wobei die Bedienelemente über eine aus der Abdeckklappe herausgeführte elektrische Verbindung, vorzugsweise eine Folienleiterbahn, welche durch einen Durchbruch des Frontrahmens hindurchgeführt ist, mit dem Gerät elektrisch verbunden werden kann.

Weiterhin ist vorteilhaft, ein lichtleitendes Element zur Beleuchtung einer in dem Frontrahmen vorgesehenen Einführungsöffnung für Aufzeichnungsträgers in dem Frontrahmen anzuordnen. Das Licht einer im Geräteinnenraum angeordneten Lichtquelle wird durch das lichtleitende Element vorteilhaft zur Einführungsöffnung gelenkt. Eine separate in dem Frontrahmen angeordnete Lichtquelle ist deshalb nicht erforderlich.

### Zeichnungen

Ein Ausführungsbeispiel der Erfindung ist in den Zeichnungen dargestellt und wird in der nachfolgenden Beschreibung näher erläutert. Es zeigt
Fig. 1 eine perspektivische Ansicht der ersten Seite des Frontrahmens ohne Abdeckklappe,
Fig. 2 eine perspektivische Ansicht der zweiten Seite des Frontrahmens ohne Abdeckklappe,
Fig. 2a ein vergrößertes Detail aus Fig. 2,
Fig. 3 eine Draufsicht auf die zweite Seite des Frontrahmens ohne Abdeckklappe,
Fig. 4 einen Teilschnitt entlang der Linie A-A in Fig. 3,
Fig. 5 einen Teilschnitt entlang der Linie B-B in Fig. 3,
Fig. 6 eine perspektivische Ansicht eines ersten Halbschalenteiles einer vor den Frontrahmen schwenkbaren Abdeckklappe,
Fig. 7 eine perspektivische Ansicht des zweiten Halbschalenteiles der vor den Frontrahmen schwenkbaren Abdeckklappe und
Fig. 8 eine Seitenansicht der aus den beiden Halbschalenteilen von Fig. 6 und Fig. 7 zusammengesetzten Abdeckklappe.

### Beschreibung des Ausführungsbeispiels

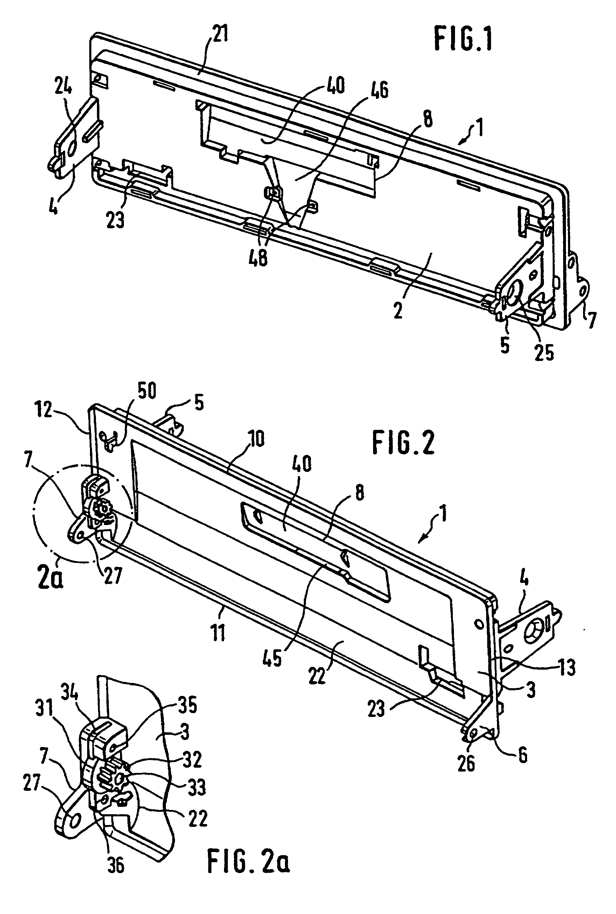

In Fig. 1 und Fig. 2 ist ein Frontrahmen zur Befestigung an einem nicht weiter dargestellten elektrischen Gerät gezeigt. Das Gerät ist in diesem Ausführungsbeispiel ein Autoradio mit integriertem Kassettenteil und weist beispielsweise ein quaderförmiges Gehäuseteil mit einer offenen Gehäusefront auf. Das Gerät kann aber auch ein Funkgerät, ein CD-Player, eine Navigationseinrichtung oder ein beliebiges anderes Gerät sein. Der Frontrahmen 1 in dem hier gezeigten Ausführungsbeispiel ist einstückig aus Kunststoff gefertigt und weist im wesentlichen die Form einer rechteckförmigen Platte mit einer ersten Seite 2 und einer dieser gegenüberliegenden zweiten Seite 3 sowie vier Stirnseiten 10,11,12 und 13 auf. Wie in Fig. 1 zu erkennen ist, ist der Frontrahmen mit einem umlaufenden Flansch 21 zur Anlage an der Gehäusefront des elektrischen Gerätes versehen. Zur Festlegung des Frontrahmens 1 am Gehäuse eines elektrischen Gerät wird der Frontrahmen mit der ersten Seite 2 auf die Gehäusefront des Gerätes aufgeschoben und deckt diese völlig ab. An zwei sich gegenüberliegenden Randbereichen der ersten Seite 2 des Frontrahmens stehen zwei Befestigungsmittel 4,5 senkrecht von der ersten Seite des Frontrahmens ab. Die Befestigungsmittel können beispielsweise als elastisch biegsame Rastmittel ausgestaltet sein, die in komplementär ausgebildete Rastmittel der Gehäusefront eingreifen. Das Gehäuse kann dann beispielsweise an seiner Innenwandung Rastnasen aufweisen, die in die Öffnungen 24,25 der Rastmittel 4,5 rastend eingreifen, so daß der Frontrahmen sicher am Gehäuse des elektrischen Gerätes festgelegt ist. In dem hier gezeigten Ausführungsbeispiel ist jedoch vorgesehen, die von der ersten Seite 2 abstehenden Befestigungsmittel 4,5 mit dem Gehäuse des elektrischen Gerätes zu verschrauben. Die Befestigungsmittel weisen zu diesem Zweck Öffnungen 24, 25 auf, welcher zur Einführung der Schrauben dienen. Die Innenwandung der Öffnungen 24,25 kann dann mit einen Gewinde versehen sein.

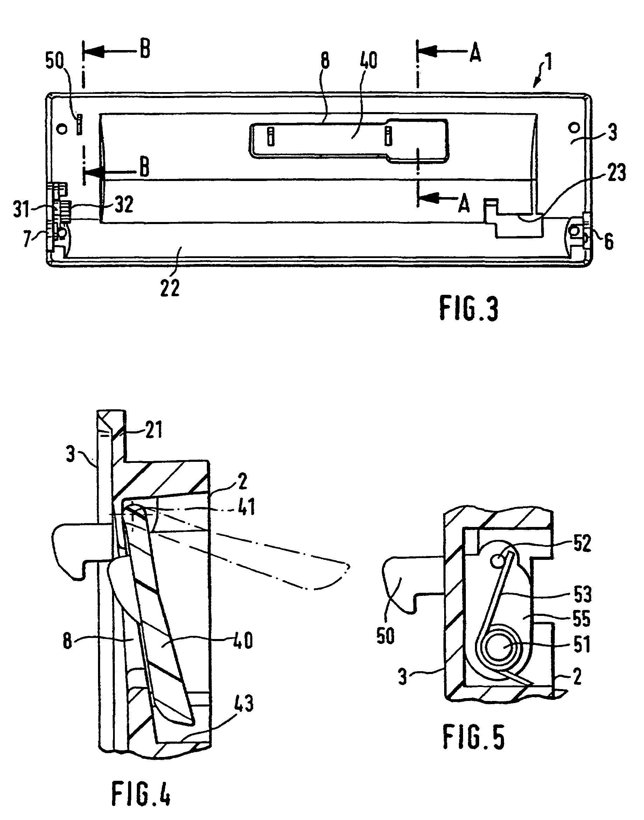

Der Frontrahmen 1 in dem hier dargestellten Ausführungsbeispiel weist eine Einführungsöffnung 8 für einen Aufzeichnungsträger auf, beispielsweise eine Tonbandkassette. Um eine Beleuchtung der Einführungsöffnung 8 mit möglichst geringem Aufwand zu realisieren, weist die erste Seite 2 des Frontrahmens eine zur unteren Stirnseite 11 des Frontrahmens hin sich verjüngende Aufnahme 46 für ein lichtleitendes Element 45 auf. Das lichtleitende Element 45 kann beispielsweise mit Schrauben, welche in die Gewindebohrungen 48 eingeschraubt werden, in der Aufnahme 46 festgelegt werden. Bei auf das Gerätegehäuse aufgesetztem Frontrahmen beleuchtet eine im Gerätegehäuse angeordnete Diode das lichtleitende Element, welches das Licht der Diode zur Einführungsöffnung 8 umlenkt. Die Einführungsöffnung 8 ist mit einer Schutzklappe 40 versehen. Wie in Fig. 4 zu erkennen ist, ist die Schutzklappe 40 in einer in der ersten Seite 2 des Frontrahmens angeordneten Versenkung 43 um ein Drehgelenk 41 drehbar angeordnet. Bei Einführung einer Kassette in die Einführungsöffnung 8 wird die Schutzklappe 40 ins Geräteinnere geschwenkt und gibt die Einführungsöffnung frei. Die Schutzklappe 40 steht im geöffneten Zustand etwas von der ersten Seite 2 des Frontrahmens ins Geräteinnere ab, greift dabei aber in den ohnehin in dem Gerät vorhandenen Einführungskanal für den Aufzeichnungsträger ein, so daß im Gehäuseinnenraum kein zusätzlicher Platz für die Schutzklappe bereitgestellt werden muß. Die Einführungsöffnung 40 wird außerdem von einer Abdeckklappe abgedeckt, welche vor die zweite Seite 3 des Frontrahmens 1 geschwenkt werden kann, wie noch ausführlicher erläutert wird.

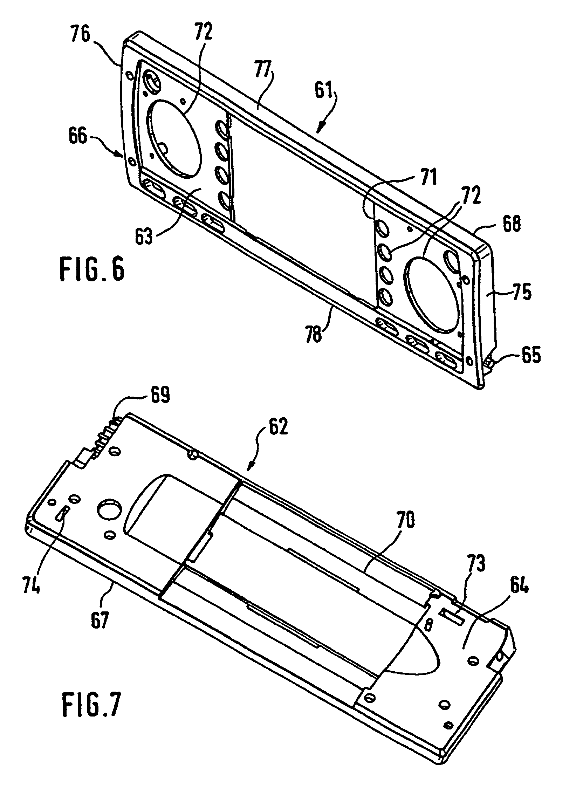

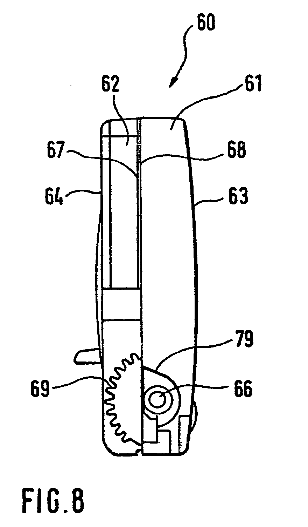

Wie in Fig. 2 dargestellt ist, weist der Frontrahmen an den sich gegenüberliegenden Randbereichen 12 und 13 zwei senkrecht von der zweiten Seite 3 abstehende Schenkel 6,7 auf. Die Schenkel 6,7 sind an ihren von der zweiten Seite abstehenden Enden mit je einer Öffnung 26,27 versehen. Die Öffnungen 26, 27 dienen der Einführung je eines Lagerzapfens 65,66 einer Abdeckklappe 60, welche an dem Frontrahmen 1 schwenkbar gelagert ist und vor die zweite Seite 3 geschwenkt werden kann. Die Abdeckklappe 60 ist in den Figuren 6,7 und 8 dargestellt. Sie umfaßt in dem hier gezeigten Ausführungsbeispiel zwei Halbschalen 61 und 62 aus Kunststoff, kann aber auch einstückig und aus einem anderen Material gefertigt sein. Fig. 6 zeigt die vordere Halbschale 61 mit der im geschlossenen Zustand der Abdeckklappe dem Betrachter zugewandten Außenseite 63. In der Außenseite 63 sind Ausnehmungen 71,72 für Bedienelemente des elektrischen Gerätes vorgesehen. In die Ausnehmung 71 kann beispielsweise ein Display eingesetzt werden. In die Ausnehmungen 72 können verschiedene für die Bedienung des Gerätes erforderliche Druck- oder Drehschalter und ähnliche Elemente eingesetzt werden. Die Bedienelemente können über eine nicht dargestellte, in die Abdeckklappe eingesetzte Leiterplatte elektrisch miteinander verbunden werden. Das zweite Halbschalenteil 62 ist in Fig. 7 dargestellt. Es weist eine im geschlossenen Zustand der zweiten Seite 3 des Frontrahmens 1 zugewandte Innenseite 64 der Abdeckklappe auf. An der Innenseite 64 ist eine Aufnahme 70 für eine Chipkarte vorgesehen. Die Abdeckklappe 60 wird wie in Fig. 8 gezeigt zusammengesetzt. Dabei wird das erste Halbschalenteil 61 mit der von der Klappenaußenseite 63 abgewandten Seite 68 auf die von der Klappeninnenseite 64 abgewandte Seite 67 des zweiten Halbschalenteils aufgesetzt. Die Leiterplatte ist dann zwischen den beiden Halbschalten 61,62 im Inneren der Abdeckklappe 60 angeordnet. Die Abdeckklappe 60 ist als im wesentlichen rechteckförmiges Plattenteil mit einer Außenseite 63, einer Innenseite 64 und vier weiteren Seiten 75,76, 77,78 ausgebildet.

Wie in Fig. 6 und Fig. 8 dargestellt ist, sind an den Seiten 75,76 des ersten Halbschalenteils 61 zwei Lagerzapfen 65,66 ausgebildet, welche in die Öffnungen 26,27 der Schenkel 6,7 zur Festlegung der Abdeckklappe an dem Frontrahmen eingeführt werden. Die Abdeckklappe 62 ist dann um eine durch die beiden Lagerzapfen 65,66 verlaufende Achse schwenkbar an der zweiten Seite des Frontrahmens angeordnet. Wie in Fig. 7 und Fig. 8 zu erkennen ist, ist an der Innenseite 64 der Abdeckklappe 60 ein konvex gekrümmtes Zahnradsegment 69 angeordnet. Das Zahnradsegment 69 ist, wie am besten in Fig. 8 zu erkennen ist, konzentrisch zum Lagerzapfen 66 angeordnet. Bei an dem Frontrahmen festgelegter Abdeckklappe 60 greift das Zahnradsegment 69 in ein Zahnrad 32 ein, das mit einem an sich bekannten Dämpfungsglied 31 gekoppelt ist. Die Anordnung des Dämpfungsgliedes an dem Frontrahmen ist in Fig. 2a dargestellt. Das Zahnrad 32 ist mit einem Lagerbolzen 33 an einem zylinderförmigen Mittelteil des Dämpfungsgliedes 31 drehbeweglich gelagert. Einer Drehung des Lagerbolzens 33 und des daran festgelegten Zahnrads 32 wirkt dabei ein in dem Dämpfungsglied angeordnetes Dämpfungsmittel bremsend entgegen, so daß die Schwenkbewegung der Abdeckklappe 60 beim Öffnen gedämpft wird. Beispielsweise kann das Dämpfungsglied 31 eine mit dem Lagerbolzen gekoppelte Reibkupplung oder ein durch seine Viskosität bremsend wirkendes Fluid enthalten. Das Dämpfungsglied 31 ist mit zwei seitlichen Vorsprüngen 34 versehen, die beispielsweise mit Schrauben 35,36 an dem einen Schenkel 7 festgelegt sind, wie in Fig. 2a dargestellt ist. Wie am besten in Fig. 2 zu erkennen ist, ist die zweite Seite 3 des Frontrahmens mit einer konkav gekrümmten Freimachung oder Versenkung 22 versehen, in welche der untere Abschnitt der Abdeckklappe 60 beim Schwenken eindringt. Wie weiterhin in Fig. 8 gezeigt ist, weist die Abdeckklappe 60 eine Aufnahme 79 für eine nicht weiter dargestellte Torsionsfeder auf. Die Torsionsfeder wird in die Ausnehmung 79 derart eingesetzt, daß ihre Windungen um den Lagerbolzen 66 herum angeordnet sind. Die Torsionsfeder stützt sich mit einem Ende an der Abdeckklappe 60 und mit dem anderen Ende an der zweiten Seite 3 des Frontrahmens ab, so daß sie beim manuellen Schließen der Abdeckklappe 60 gespannt wird. Zur elektrischen Verbindung der Abdeckklappe 60 mit dem Gerät wird eine mit der Leiterplatte verbundene Folienleiterbahn durch eine Ausnehmung 73 an der Innenseite 64 der Abdeckklappe und einen Durchbruch 23 im Frontrahmen ins Geräteinnere geführt.

Im geschlossenen Zustand der Klappe greift ein an der zweiten Seite 3 des Frontrahmens angeordneter Haken 50 in eine Ausnehrnung 74 an der Innenseite der Abdeckklappe 60 ein, wodurch die Abdeckklappe 60 arretiert wird. Ein Detail ist in Fig. 5 dargestellt. An der Außenseite der Abdeckklappe 60 ist ein Betätigungselement angeordnet, bei dessen Betätigung der Haken 50 entgegen der Spannkraft einer Torsionsfeder 53 in Fig. 5 nach rechts gedreht wird, so daß die Abdeckklappe freigegeben wird und bedingt durch die Federvorspannung automatisch aufschwenkt. Der Haken 55 ist hierzu einstückig mit einem Basisteil 55 verbunden, welches in einer Ausnehmung des Frontrahmens angeordnet ist und um einem an dem Frontrahmen angeordneten Achsschenkel 51 drehbar angeordnet ist. Die Torsionsfeder 53 stützt sich mit einem Schenkel an einem Zapfen 52 des Basisteils 55 und mit dem anderen Schenkel an dem Frontrahmen 1 ab. Wie in Fig. 5 erkennbar ist, ist die Arretierungsvorrichtung 50,55 vollständig in dem Frontrahmen integriert.

Wie in Fig. 1 und Fig. 2 zu erkennen ist, bleibt die oben beschriebene Ausgestaltung des Schwenkmechanismus an der zweiten Seite 3 des Frontrahmens ohne Einfluß auf die Ausgestaltung der ersten Seite 2 des Frontrahmens. Außer den Befestigungsmitteln 4,5 zur Festlegung des Frontrahmens an dem Gerätegehäuse steht kein Teil von der ersten Seite 2 des Frontrahmens ab. Die Befestigungsmittel 4,5 sind vorteilhaft normiert ausgebildet, so daß der Frontrahmen auf verschiedene Geräte mit unterschiedlichen Innenleben aufgesetzt werden kann.

## Patentansprüche

1. Frontrahmen für ein elektrisches Gerät, insbesondere ein Autoradio, welcher Frontrahmen (1) eine ersten Seite (2) und eine der ersten Seite (2) gegenüberliegende zweite Seite (3) aufweist, wobei der Frontrahmen mit der ersten Seite (2) an einem elektrischen Gerät befestigbar ist und wobei an dem Frontrahmen (1) eine vor die zweite Seite (3) schwenkbare Abdeckklappe (60) vorgesehen ist, welche Abdeckklappe (60) an der von der ersten Seite abgewandten zweiten Seite (3) des Frontrahmens angeordnet ist, **dadurch gekennzeichnet, dass** alle für die Schwenkmechanik der Abdeckklappe vorgesehenen mechanischen Baukomponenten (6,7,31,32,50,65,66,69) an der zweiten Seite (3) angeordnet sind.

2. Frontrahmen nach Anspruch 1, **dadurch gekennzeichnet, daß** von der ersten Seite (2) des Frontrahmens (1) abstehende Befestigungsmittel (4,5) vorgesehen sind.

3. Frontrahmen nach Anspruch 2, **dadurch gekennzeichnet, daß** die Befestigungsmittel (4,5) als Rastmittel ausgebildet sind.

4. Frontrahmen nach Anspruch 2, **dadurch gekennzeichnet, daß** die Befestigungsmittel (4,5) Öffnungen (24,25) zur Durchführung von Schrauben aufweisen.

5. Frontrahmen nach Anspruch 1, **dadurch gekennzeichnet, daß** an einander gegenüberliegenden Randbereichen der zweiten Seite (3) des Frontrahmens zwei von der zweiten Seite (3) abstehende Schenkel (6,7) angeordnet sind, wobei die Abdeckklappe (60) an den Schenkeln (6,7) schwenkbar angeordnet ist.

6. Frontrahmen nach Anspruch 5, **dadurch gekennzeichnet, daß** die Abdeckklappe (60) als im wesentlichen rechteckförmiges Plattenteil mit einer im geschlossenen Zustand der zweiten Seite (3) zugewandten Innenseite (64) und einer dieser gegenüberliegenden Außenseite (63) ausgebildet ist und daß an zwei sich gegenüberliegenden Seiten (75,76) der Abdeckklappe (60) Lagerbolzen (65,66) vorgesehen sind, die in jeweils eine in den Schenkeln (6,7) vorgesehene Öffnung (26, 27) drehbeweglich eingreifen.

7. Frontrahmen nach Anspruch 6, **dadurch gekennzeichnet, daß** an der zweiten Seite (3) des Frontrahmens (1) wenigstens ein die Schwenkbewegung beim Öffnen der Abdeckklappe (60) dämpfendes Dämpfungsglied (31) angeordnet ist.

8. Frontrahmen nach Anspruch 7, **dadurch gekennzeichnet, daß** beim Schwenken der Abdeckklappe ein an der Innenseite (64) der Abdeckklappe (60) angeordnetes Zahnradsegment (69) ein mit dem Zahnradsegment (69) in Eingriff stehendes Zahnrad (32) antreibt, welches Zahnrad über einen zu der Schwenkachse der Abdeckklappe parallelen Lagerbolzen (33) drehbeweglich an dem Dämpfungsglied (31) gelagert ist, wobei Dämpfungsmittel des Dämpfungsgliedes (31) einer Drehung des Zahnrads (32) bremsend entgegenwirken.

9. Frontrahmen nach Anspruch 7 oder 8, **dadurch gekennzeichnet, daß** das Dämpfungsglied (31) an einem der von dem Frontrahmen (1) abstehenden Schenkel (7) angeordnet ist.

10. Frontrahmen nach einem der vorstehenden Ansprüche, **dadurch gekennzeichnet, daß** die Abdeckklappe (60) entgegen der Spannkraft eines Federelementes zur zweiten Seite (3) des Frontrahmens (1) hinschwenkbar ist und im geschlossenen Zustand mittels eines an dem Frontrahmen angeordneten Verriegelungsmechanismus (50,74) arretierbar ist.

11. Frontrahmen nach Anspruch 1, **dadurch gekennzeichnet, daß** die Abdeckklappe (60) mit Bedienelementen zur Bedienung des elektrischen Gerätes versehen ist und über eine aus der Innenseite (64) der Abdeckklappe (60) herausgeführte elektrische Verbindung, vorzugsweise eine Folienleiterbahn, welche durch einen Durchbruch (23) des Frontrahmens (1) hindurchgeführt ist, mit dem Gerät elektrisch verbindbar ist.

12. Frontrahmen nach Anspruch 1, **dadurch gekennzeichnet, daß** der Frontrahmen (1) eine Einführungsöffnung (8) für einen Aufzeichnungsträgers aufweist.

13. Frontrahmen nach Anspruch 12, **dadurch gekennzeichnet, daß** an dem Frontrahmen (1) ein lichtleitendes Element (45) zur Beleuchtung der Einführungsöffnung (8) angeordnet ist.

14. Frontrahmen nach Anspruch 12, **dadurch gekennzeichnet, daß** in der Einführungsöffnung (8) des Frontrahmens (1) eine Schutzklappe (40) angeordnet ist, welche bei Einführung eines Aufzeichnungsträgers in die Einführungsöffnung (8) von der Einführungsöffnung wegschwenkt.

15. Elektrisches Gerät, insbesondere Autoradio, mit einem Gehäuse und einem an dem Gehäuse festgelegtem Frontrahmen (1) nach Anspruch 1.

16. Elektrisches Gerät nach Anspruch 15, **dadurch gekennzeichnet, daß** an der ersten Seite des Frontrahmens (1) und an dem Gerätegehäuse zueinander komplementär ausgebildete Befestigungsmittel (4,5) vorgesehen sind, welche bei der Festlegung des Frontrahmens an dem Gerätegehäuse miteinander in Eingriff bringbar sind.

## Claims

1. Front frame for an electrical appliance, in particular a car radio, which front frame (1) has a first side (2) and a second side (3) lying opposite the first side (2), it being possible for the front frame to be fastened by the first side (2) to an electrical appliance, and a covering flap (60) which can be pivoted in front of the second side (3) being provided on the front frame (1), which covering flap (60) is arranged on the second side (3) of the front frame that faces away from the first side, **characterized in that** all of the mechanical structural components (6, 7, 31, 32, 50, 65, 66, 69) which are provided for the pivoting mechanism of the covering flap are arranged on the second side (3).

2. Front frame according to Claim 1, **characterized in that** fastening means (4, 5) protruding from the first side (2) of the front frame (1) are provided.

3. Front frame according to Claim 2, **characterized in that** the fastening means (4, 5) are designed as latching means.

4. Front frame according to Claim 2, **characterized in that** the fastening means (4, 5) have openings (24, 25) for passing screws through.

5. Front frame according to Claim 1, **characterized in that** two limbs (6, 7) which protrude from the second side (3) are arranged on mutually opposite edge regions of the second side (3) of the front frame, the covering flap (60) being arranged pivotably on the limbs (6, 7).

6. Front frame according to Claim 5, **characterized in that** the covering flap (60) is designed as an essentially rectangular panel part with an inner side (64) which faces the second side (3) in the closed state, and an outer side (63) which lies opposite the said inner side, and **in that** bearing bolts (65, 66) are provided on two opposite sides (75, 76) of the covering flap (60) and engage rotatably in a respective opening (26, 27) provided in the limbs (6, 7).

7. Front frame according to Claim 6, **characterized in that** at least one damping element (31) which damps the pivoting movement during the opening of the covering flap (60) is arranged on the second side (3) of the front frame (1).

8. Front frame according to Claim 7, **characterized in that**, when the covering flap is pivoted, a toothed-wheel segment (69) arranged on the inner side (64) of the covering flap (60) drives a toothed wheel (32) which is in engagement with the toothed-wheel segment (69), which toothed wheel is mounted rotatably on the damping element (31) via a bearing bolt (33) parallel to the pivoting axis of the covering flap, damping means of the damping element (31) counteracting a rotation of the toothed wheel (32) in a retarding manner.

9. Front frame according to Claim 7 or 8, **characterized in that** the damping element (31) is arranged on one of the limbs (7) protruding from the front frame (1).

10. Front frame according to one of the preceding claims, **characterized in that** the covering flap (60) can be pivoted towards the second side (3) of the front frame (1) counter to the tensioning force of a spring element and can be retained in the closed state by means of a locking mechanism (50, 74) arranged on the front frame.

11. Front frame according to Claim 1, **characterized in that** the covering flap (60) is provided with operating elements for operating the electrical appliance and can be connected electrically to the appliance via an electrical connection led out of the inner side (64) of the covering flap (60), preferably a film-type conductor track, which is guided through an aperture (23) in the front frame (1).

12. Front frame according to Claim 1, **characterized in that** the front frame (1) has an introducing opening (8) for a recording medium.

13. Front frame according to Claim 12, **characterized in that** a light-conducting element (45) for illuminating the introducing opening (8) is arranged on the front frame (1).

14. Front frame according to Claim 12, **characterized in that** a protective flap (40) is arranged in the introducing opening (8) of the front frame (1) and, when a recording medium is introduced into the introducing opening (8), is pivoted away from the introducing opening.

15. Electrical appliance, in particular car radio, having a housing and a front frame (1) according to Claim 1, which is fixed on the housing.

16. Electrical appliance according to Claim 15, **characterized in that** fastening means (4, 5) which are of mutually complementary design are provided on the first side of the front frame (1) and on the appliance housing and, when the front frame is fixed on the appliance housing, can be brought into engagement with each other.

## Revendications

1. Panneau frontal pour un appareil électrique, en particulier un autoradio, lequel panneau frontal (1) présente un premier côté (2) et un deuxième côté (3) en face du premier côté (2), le panneau frontal pouvant être fixé par le premier côté (2) à un appareil électrique avec un volet de recouvrement (60) qui pivote devant le deuxième côté (3) sur le panneau frontal (1), le volet de recouvrement (60) sur le deuxième côté (3) du panneau frontal, étant monté sur la face non tournée vers le premier côté,
**caractérisé en ce que**
tous les composants (6, 7, 31, 32, 50, 65, 66, 69) mécaniques prévus pour le mécanisme pivotant du volet de recouvrement sont disposés sur le deuxième côté (3).

2. Panneau frontal selon la revendication 1,
**caractérisé en ce que**
l'on prévoit des moyens de fixation (4, 5) qui font saillie sur le premier côté (2) du panneau frontal (1).

3. Panneau frontal selon la revendication 2,
**caractérisé en ce que**
les moyens de fixation (4, 5) sont conçus en tant que moyens d'accrochage.

4. Panneau frontal selon la revendication 2,
**caractérisé en ce que**
les moyens de fixation (4, 5) présentent des ouvertures (24, 25) destinées à passer des vis.

5. Panneau frontal selon la revendication 1,
**caractérisé en ce que**
sur des zones marginales - qui se font face l'une l'autre - du deuxième côté (3) du panneau frontal sont disposées deux branches (6, 7) qui font saillie sur le deuxième côté (3), le volet de recouvrement (60) étant disposé de façon à pivoter sur les branches (6, 7).

6. Panneau frontal selon la revendication 5,
**caractérisé en ce que**
le volet de recouvrement (60) est conçu comme pièce en plaque pratiquement rectangulaire comportant un côté intérieur (64) orienté vers le deuxième côté (3) à l'état fermé et un côté extérieur (63) opposé au premier, et
sur les deux côtés (75, 76) - qui se font face - du volet de recouvrement (60) on prévoit des pivots (65, 66) qui ont prise de façon à pouvoir tourner dans respectivement une ouverture (26, 27) prévue dans les branches (6, 7).

7. Panneau frontal selon la revendication 6,
**caractérisé en ce que**
sur le deuxième côté (3) du panneau frontal (1) est placé au moins un organe d'amortissement (31) qui amortit le mouvement pivotant lorsqu'on ouvre le volet de recouvrement (60).

8. Panneau frontal selon la revendication 7,
**caractérisé en ce que**
lorsque le volet de recouvrement pivote, un segment de roue dentée (69) disposé sur le côté intérieur (64) du volet de recouvrement (60) entraîne une roue dentée (32) qui est en prise avec le segment de roue dentée (69), laquelle roue dentée est montée sur l'organe d'amortissement (31) de façon à pouvoir tourner au moyen d'un pivot (33) parallèle à l'axe de pivotement du volet de recouvrement, les moyens d'amortissement de l'organe d'amortissement (31) s'opposant par freinage à une rotation de la roue dentée (32).

9. Panneau frontal selon la revendication 7 ou 8,
**caractérisé en ce que**
l'organe d'amortissement (31) est disposé sur une des branches (7) qui font saillie sur le panneau frontal (1).

10. Panneau frontal selon l'une des revendications précédentes,
**caractérisé en ce que**
le volet de recouvrement (60) peut pivoter vers le deuxième côté (3) du panneau frontal (1) en s'opposant à la force élastique d'un élément élastique et peut être bloqué à l'état fermé au moyen d'un mécanisme de verrouillage (50, 74) disposé sur le panneau frontal.

11. Panneau frontal selon la revendication 1,
**caractérisé en ce que**
le volet de recouvrement (60) est muni d'éléments de manoeuvre destinés à manoeuvrer l'appareil électrique et peut être relié électriquement à l'appareil au moyen d'une liaison électrique, de préférence une piste conductive en feuille, qui provient du côté intérieur (64) du volet de recouvrement (60) et qui est passée par un passage (23) du panneau frontal (1).

12. Panneau frontal selon la revendication 1,
**caractérisé en ce que**
le panneau frontal (1) présente une ouverture d'insertion (8) pour un support d'enregistrement.

13. Panneau frontal selon la revendication 12,
**caractérisé en ce que**
sur le panneau frontal (1) est disposé un élément (45) guidant la lumière destiné à éclairer l'ouverture d'insertion (8).

14. Panneau frontal selon la revendication 12,
**caractérisé en ce que**
dans l'ouverture d'insertion (8) du panneau frontal (1) est disposé un volet de protection (40) qui bascule de l'ouverture d'insertion lorsqu'on insère un support d'enregistrement dans l'ouverture d'insertion (8).

15. Appareil électrique, en particulier autoradio, comportant un boîtier et un panneau frontal selon la revendication 1, fixé au boîtier.

16. Appareil électrique selon la revendication 15,
**caractérisé en ce que**
sur le premier côté du panneau frontal (1) et sur le boîtier de l'appareil, des moyens de fixation (4, 5) formés de façon complémentaire l'un par rapport à l'autre peuvent être amenés en prise l'un avec l'autre lorsque le panneau frontal est fixé au boîtier de l'appareil.
